# DEMANDE DE BREVET EUROPEEN

(11) **EP 0 778 126 A1**
(43) Date de publication de la demande: **11.06.1997**
(21) Numéro de dépôt: 96402532.4
(22) Date de dépôt: 26.11.1996
(51) Int. Cl.: B32B 17/10, C03C 27/12, E04H 12/02

(54) **Structure portante en verre**

(30) Priorité: 06.12.1995 FR 9514437
(71) Demandeur: SAINT-GOBAIN VITRAGE, 92400 Courbevoie (FR)
(72) Inventeur: Riom, Pierre, 45110 Chateauneuf (FR); Debrus, Marie-Hélène, 45570 Dampierre en Burly (FR)
(74) Mandataire: Goldenberg, Virginie Isabelle

(57) **Abrégé**

La présente invention concerne une structure portante simplifiée à base de verre, cette structure étant en majeure partie pleine et comprenant au moins un ensemble porteur formé d'au moins deux feuilles de verre séparées par au moins une feuille de matière organique, la structure comprenant également au moins un élément protecteur sur une face de l'ensemble porteur, cet élément protecteur étant formé d'au moins une feuille ou couche de matière inorganique et/ou d'au moins une feuille ou couche de matière organique.

## Description

La présente invention concerne une structure portante, notamment une structure de type poteau, à base de verre et présentant les propriétés mécaniques requises pour son utilisation. La présente invention concerne également les assemblages architecturaux réalisés à partir de telles structures.

L'emploi du verre (minéral) pour remplacer des matériaux plus traditionnels comme les métaux, le béton, le bois, etc... dans la réalisation de structures portantes oblongues de type colonnes, poteaux, poutres, etc... pour des raisons notamment esthétiques, est connu en soi. Le verre utilisé dans de telles structures peut se présenter sous différentes formes notamment sous la forme de fils continus, de billes, de plaques ou de tubes. Si les structures ainsi réalisées possèdent des propriétés de transparence appréciées, il est impératif qu'elles offrent en même temps toutes les garanties en matière de sécurité et notamment qu'elles présentent des caractéristiques de résistance mécanique suffisantes pour leur utilisation.

Des structures portantes répondant à ces critères sont décrites par exemple dans la demande de brevet WO 93/01372. Cette demande propose des éléments de structure formés par l'association de trois catégories d'éléments : des éléments en verre de type tige, tube, plaques, billes, etc..., des fibres transparentes telles que des fibres de verre, et des résines transparentes. Ces structures permettent d'obtenir un bon compromis entre la transparence et les propriétés mécaniques recherchées. Cependant, leur réalisation nécessite plusieurs étapes plus ou moins longues et l'utilisation de plusieurs catégories de produits verriers ou organiques présentant parfois des coûts élevés (tubes de verre, plaques obtenues à partir de tissus de verre, résine coûteuse, etc...) et de telles structures apparaissent relativement complexes et onéreuses.

Des structures porteuses creuses à base de plaques de verre et/ou de matière organique transparente sont également connues mais ces structures sont généralement complexes et de réalisation peu aisée.

La présente invention a pour but de fournir une structure portante en majeure partie transparente, cette structure étant de construction et de réalisation simplifiées par rapport aux structures portantes en verre existantes et présentant néanmoins les propriétés mécaniques requises pour son utilisation.

La structure portante selon l'invention est en majeure partie pleine et comprend au moins un ensemble porteur formé d'au moins deux feuilles de verre séparées par au moins une feuille de matière organique, la structure comprenant également au moins un élément protecteur sur une face de l'ensemble porteur, cet élément protecteur étant formé d'au moins une feuille ou couche de matière inorganique et/ou d'au moins une feuille ou couche de matière organique.

Par « en majeure partie pleine », on entend que les composants de la structure portante délimitent un volume occupé au moins à 50 % et, de préférence, au moins à 75 % par de la matière.

De la façon la plus simple, la structure portante selon l'invention se présente sous la forme d'un verre feuilleté formé par l'ensemble porteur et le ou les éléments protecteurs.

L'ensemble porteur doit présenter une résistance mécanique suffisante pour que la structure portante puisse convenir à l'application envisagée. Cet ensemble porteur doit notamment résister à des efforts importants de cisaillement et doit résister aux chocs. Il doit répondre aux normes existantes pour les applications envisagées (hauteur hors-sol, sécurité, isolation, etc...). Dans la structure feuilletée formant l'ensemble porteur, les feuilles de verre sont choisies avantageusement parmi les feuilles de verre ayant subi un traitement visant à leur conférer une résistance mécanique accrue. Ce traitement est de préférence une trempe chimique, notamment pour les feuilles de verre n'excédant pas 2-3 mètres de longueur. Cependant, selon l'application visée, les dimensions de l'ensemble porteur, le verre utilisé, etc... les feuilles de verre peuvent également avoir été renforcées par une trempe thermique (plutôt que chimique) ou simplement avoir subi une recuisson.

Le ou les éléments protecteurs assurent principalement un rôle de protection de l'ensemble porteur. Cette protection peut être une protection contre les chocs, le vandalisme, la corrosion, etc... Dans le cas où les feuilles de verre de l'ensemble porteur sont trempées chimiquement, le ou les éléments protecteurs empêchent, par exemple, la fissuration superficielle de l'élément porteur pouvant entraîner une diminution de la résistance mécanique du verre.

Chaque face de l'ensemble porteur peut être munie d'un élément protecteur. Chaque élément protecteur peut consister le plus simplement en une feuille de verre assemblée à l'ensemble porteur par l'intermédiaire d'au moins une feuille de matière organique. Cette feuille de verre peut être simplement recuite mais elle est, de préférence, trempée chimiquement ou éventuellement thermiquement. L'élément protecteur peut également consister en une feuille de matière organique transparente (ou éventuellement translucide) assemblée généralement par collage à l'ensemble porteur, ce collage pouvant se faire directement, par l'intermédiaire d'une colle, ou éventuellement par l'intermédiaire d'une autre feuille de matière organique. L'élément protecteur peut également consister en une couche protectrice mince présentant notamment des propriétés anticorrosion et, éventuellement, anti-salissures et/ou anti-buée, etc... ou peut être revêtu d'une telle couche sur son côté extérieur à la structure portante.

Les feuilles de verre utilisées pour réaliser l'ensemble porteur et, éventuellement, le ou les éléments protecteurs sont généralement des feuilles de verre silico-sodo-calcique habituellement utilisées pour réaliser des verres feuilletés. Le verre constitutif des feuilles peut être coloré de façon plus ou moins importante par des agents colorants présents comme impuretés ou ajoutés volontairement dans sa composition ou peut comprendre à l'inverse un taux limité d'agents colorants (par exemple moins de 200 ppm en poids d'oxydes de fer et moins de 100 ppm des autres oxydes susceptibles de colorer le verre). L'épaisseur des feuilles de verre utilisées est généralement comprise entre 3 et 20 mm.

Les feuilles de matière organique utilisées pour assembler les feuilles de verre les unes aux autres peuvent être choisies parmi les feuilles de matière organique habituellement employées pour réaliser des verres feuilletés. Elles peuvent consister notamment en des feuilles de polyvinylbutyral (PVB), de polyuréthane (PU), etc... Lorsque l'élément protecteur consiste en une feuille de matière organique transparente, cette feuille peut être par exemple une feuille de polycarbonate, de PU, de matière acrylique ou méthacrylique, etc...

Les feuilles de verre de la structure portante peuvent présenter des compositions identiques ou différentes, de même que les feuilles de matière organique utilisées.

Outre l'ensemble porteur et le ou les éléments protecteurs, la structure portante peut comprendre en au moins l'un de ses chants une protection périphérique, sur tout ou partie de la longueur du chant, cette protection pouvant consister en une plaque ou un élément oblong de section droite géométrique ou non et étant par exemple collée sur le chant directement ou par l'intermédiaire d'une colle ou d'un intercalaire organique. Cette protection peut être réalisée par exemple en l'un des matériaux suivants : polycarbonate, PU, matière acrylique ou méthacrylique, verre, métal (acier inoxydable, aluminium...), bois, etc... Dans le cas de structures portantes de type poteau, les chants latéraux dans la partie inférieure (après installation) desdites structures sont préférentiellement pourvus de protections périphériques.

La structure portante peut aussi comprendre un ou des éléments conducteurs tels que : fils électriques, tresses, clinquants, câbles, connecteurs, etc... notamment lorsque ladite structure est destinée à être utilisée à des fins de signalisation ou d'éclairage. Ces éléments conducteurs peuvent être, par exemple, noyés dans une des feuilles de matière organique de la structure portante, notamment de l'ensemble porteur, et/ou peuvent être appliqués en au moins l'un des chants d'au moins un des composants de la structure portante, ce composant étant éventuellement de dimensions plus petites que les autres composants de façon à être en retrait par rapport au chant de la structure portante et à permettre le passage du ou des éléments conducteurs à l'intérieur de la structure portante.

La structure portante peut également comprendre une ou plusieurs couches d'un ou plusieurs émaux en au moins une face d'une des feuilles de verre, ces émaux pouvant être des émaux conducteurs (à base d'argent notamment) ou pouvant être utilisés à des fins essentiellement décoratives.

Les feuilles de verre de la structure portante peuvent également avoir reçu d'autres dépôts, par exemple des dépôts d'oxydes métalliques semi-conducteurs, afin de conférer certaines propriétés lumineuses ou énergétiques à la structure portante.

Lorsque la structure portante est destinée à l'affichage lumineux d'informations, au moins l'une des feuilles de matière transparente (de préférence une feuille de verre) de la structure portante peut présenter au moins une face localement diffusante vis-à-vis de la lumière, la (les) zone(s) diffusante(s) correspondant à l'information que le panneau est destiné à afficher et étant obtenue(s) par exemple par dépolissage contrôlé de type sablage ou attaque acide ; la feuille en question est dans ce cas également équipée en au moins l'un de ses chants de moyen(s) d'éclairage.

La structure portante peut également comprendre en l'une de ses extrémités (notamment sa base en position montée dans le cas d'une structure portante de type poteau), un support ou socle ou élément d'assise, par exemple en métal, les bords de ce support enserrant, préférentiellement, sur une certaine hauteur, l'ensemble porteur et le ou les éléments protecteurs, ce support assurant notamment le maintien dans une position déterminée de la structure portante. Dans le cas d'un poteau par exemple, ce support peut être partiellement enfoncé dans le sol et la base de l'assemblage formé par l'ensemble porteur et par l'élément protecteur peut être encastrée dans la partie creuse émergeant du sol de ce support. Un joint ou un intercalaire en matière organique peut éventuellement être intercalé entre le support et l'assemblage formé par l'ensemble porteur et l'élément protecteur.

Dans un mode de réalisation de l'invention illustratif mais nullement limitatif, la structure portante est un support d'enseigne publicitaire et se présente une fois installé sous forme d'un feuilleté de 2,8 m de hauteur, de 50 cm de largeur et de 53 mm d'épaisseur, ce feuilleté se composant de cinq feuilles de verre trempé chimiquement reliées par des feuilles de PVB, les trois feuilles centrales présentant chacune une épaisseur de 12 mm et étant reliées l'une à l'autre par une feuille de PVB de 2,5 mm d'épaisseur, l'ensemble ainsi formé représentant l'ensemble porteur de la structure portante et chacune des feuilles de verre extérieures de la structure portante (chacune de ces feuilles constituant un élément protecteur de la structure portante) présentant une épaisseur de 4 mm et étant reliée à l'une des faces de l'ensemble porteur par l'intermédiaire d'une feuille de PVB de 2 mm d'épaisseur. Sept tresses métalliques de 7 mm de largeur sur 0,35 mm d'épaisseur sont réparties dans au moins l'une ou éventuellement les deux feuilles intercalaires de PVB de 2,5 mm d'épaisseur, certaines de ces tresses ou des tresses supplémentaires pouvant également être placées sur l'un des chants ou les deux chants latéraux de la feuille centrale. Le verre utilisé pour réaliser les feuilles de verre est un verre « extra blanc » comprenant moins de 200 ppm d'oxydes de fer et moins de 100 ppm des autres oxydes susceptibles de colorer le verre. Les tresses métalliques noyées dans le PVB, outre leur fonction d'alimentation électrique, permettent de mettre en évidence la profondeur de la structure portante. Chacun des deux chants latéraux de la structure portante est protégé sur une hauteur de 1 m à partir de la base de la structure émergeant du sol, par exemple par une plaque d'acier inoxydable. Le feuilleté est par ailleurs encastré et maintenu par serrage dans un élément d'assise en acier inoxydable dont les parois émergent à 20 cm au-dessus du sol (un matériau amortisseur et un joint de finition étant intercalés entre le verre et le métal). L'ensemble est fixé sur le sol par des chevilles.

Une telle structure portante est notamment apte à résister à l'appui à mi-hauteur d'une échelle présentant une charge de 100 kg et peut supporter une charge de 500 kg au moins.

Les structures portantes selon l'invention sont destinées notamment à former des colonnes, piliers, poteaux, pylônes, poutres, etc... et peuvent atteindre plusieurs mètres de longueur. Ces structures sont généralement droites mais peuvent également être courbées, les feuilles de verre utilisées étant alors préférentiellement trempées chimiquement.

Les structures feuilletées constituant les structures portantes selon l'invention sont généralement réalisées par assemblage à chaud et sous pression de feuilles de verre et de feuilles de matière organique, les feuilles de verre ayant subi préalablement une trempe chimique ou thermique suivant leur longueur et/ou leur épaisseur, ou éventuellement une recuisson.

Des assemblages architecturaux peuvent être réalisés à partir des structures portantes selon l'invention, ces assemblages comprenant une ou plusieurs structures portantes selon l'invention. Dans le cas où l'assemblage comprend plusieurs structures portantes, les structures portantes sont par exemple collées ou soudées l'une à l'autre, l'assemblage obtenu pouvant présenter une longueur plus importante et/ou prendre différentes formes, notamment pouvant présenter une section droite en forme de T, de V (assemblage d'au moins deux structures portantes), de H, de X, de U (assemblage d'au moins trois structures portantes), etc... Le collage des structures portantes entre elles, notamment lorsqu'il se fait en au moins l'un des chants desdites structures, est de préférence effectué à l'aide d'une colle compatible avec la matière organique employée pour la réalisation des structures, de préférence une colle identique à ladite matière.

Les structures portantes selon l'invention peuvent servir à soutenir différentes charges (enseignes, lignes aériennes, branches, caissons, constructions, etc...), ces charges pouvant être placées à une extrémité de la ou des structures utilisées ou pouvant être placées en porte-à-faux par rapport à la ou lesdites structures. Les charges sont généralement fixées aux structures portantes par l'intermédiaire de pièces telles que des colliers de serrage, des ossatures porteuses (plateaux, etc...). Dans l'exemple précédemment décrit d'un support d'enseigne publicitaire, la structure portante soutient par exemple un caisson elliptique de 3 m de large et d'une masse de l'ordre de 500 kg, ce caisson prenant appui notamment sur un plateau fixé à l'extrémité libre de la structure portante. Les assemblages architecturaux comprennent, le cas échéant, les charges précédemment mentionnées et les pièces complémentaires pour la fixation des charges aux structures portantes. L'assemblage architectural selon l'invention peut également n'être constitué que d'une ou plusieurs structures portantes selon l'invention, dans le cas, par exemple, de simples panneaux d'affichage.

Les structures portantes ou les assemblages architecturaux selon l'invention peuvent être utilisés dans toutes sortes d'applications, notamment peuvent être utilisés comme supports de lignes aériennes, électriques (la structure selon l'invention constitue avantageusement, à ce propos, un support isolant en soi) ou téléphoniques, comme poteaux d'éclairage, de signalisation, d'affichage, comme feux tricolores, etc...

## Revendications

1. Structure portante en majeure partie pleine comprenant au moins un ensemble porteur formé d'au moins deux feuilles de verre séparées par au moins une feuille de matière organique, la structure comprenant également au moins un élément protecteur sur une face de l'ensemble porteur, cet élément protecteur étant formé d'au moins une feuille ou couche de matière inorganique et/ou d'au moins une feuille ou couche de matière organique.

2. Structure portante selon la revendication 1, caractérisée en ce que les feuilles de verre de ladite structure sont trempées chimiquement.

3. Structure portante selon l'une des revendications 1 ou 2, caractérisée en ce qu'elle comprend au moins une protection périphérique en au moins une partie d'au moins l'un de ses chants.

4. Structure portante selon l'une des revendications 1 à 3, caractérisée en ce qu'elle comprend au moins un élément conducteur.

5. Structure portante selon l'une des revendications 1 à 4, caractérisée en ce qu'elle comprend au moins un élément d'assise.

6. Structure portante selon l'une des revendications 1 à 5, caractérisée en ce que le verre constitutif des feuilles de verre comprend moins de 200 ppm d'oxydes de fer et moins de 100 ppm des autres oxydes susceptibles de colorer le verre.

7. Structure portante selon l'une des revendications 1 à 6, caractérisée en ce que l'ensemble porteur et le ou les éléments protecteurs forment un verre feuilleté.

8. Assemblage architectural, caractérisé en ce qu'il comprend une ou plusieurs structures portantes selon l'une des revendications 1 à 7.

9. Assemblage selon la revendication 8, caractérisé en ce qu'il comprend en outre au moins une charge.

10. Assemblage selon la revendication 8 ou la revendication 9, caractérisé en ce qu'il comprend au moins une pièce complémentaire pour la fixation de la ou des charges à la ou aux structures portantes.
